# EUROPEAN PATENT SPECIFICATION

(11) **EP 1 513 784 B1**
(45) Date of publication and mention of the grant of the patent: **16.08.2017**
(21) Application number: 03732613.9
(22) Date of filing: 19.06.2003
(51) Int. Cl.: C05C 1/00, C05C 1/02, C05C 9/02, C05G 3/10, C05G 5/00

(54) **COATED FERTILISER PARTICLES**
BESCHICHTETE DÜNGEMITTELTEILCHEN
PARTICULES D'ENGRAIS ENROBEES

(30) Priority: 20.06.2002 FI 20021201
(43) Date of publication of application: 16.03.2005
(73) Proprietor: Yara International ASA, 0213 Oslo (NO)
(72) Inventor: HERO, Heikki, FIN-02200 Espoo (FI); POUKARI, Juhani, FIN-02430 Masala (FI)
(74) Representative: Berggren Oy, Helsinki & Oulu
(86) International application number: PCT/FI2003/000505
(87) International publication number: WO 2004/000759

(56) References cited:
- WO-A-97/14665
- GB-A- 570 267
- GB-A- 785 645
- GB-A- 815 829
- GB-A- 915 450
- GB-A- 991 575
- GB-A- 1 588 641
- US-A- 3 708 276
- US-A- 4 015 970
- DATABASE WPI Section Ch, Week 197618 Derwent Publications Ltd., London, GB; Class A11, AN 1976-31956X XP002255072 -& DD 117 787 A (RICHTER H), 5 February 1976 (1976-02-05)

## Description

The invention relates to coated fertiliser particles containing nitrogen, phosphorus and/or potassium nutrients for use as a fertiliser. The invention also relates to a coating method for increasing the size of fertiliser particles containing nitrogen, phosphorus and/or potassium nutrients, for controlling their nutrient content to the desired level and for enhancing their physical quality.

### State of the art

It is well known in the art to use fertilisers in the form of granules. The handling, transport and storage of fertiliser granules may cause problems, especially if the granules are readily breakable. Besides harmful dusting, the separation of nutrients (e.g. in the case of fertiliser granules containing several nutrients) may result in a less regular fertilising action of the fertiliser.

Some nutrients used in the fertilisers may also cause problems due to difficulties in handling and/or incompability.

Ammonium nitrate (AN) and urea are commonly used as the principal nitrogen source of fertilisers; ammonium nitrate is used especially in Europe and urea especially in the developing countries. Ammonium nitrate is commercially available either in the form of porous or dense prills, in crystalline particles or, in some cases, also as granulated particles. Ammonium nitrate is distributed on fields either as such (straight material containing 30 to 34.5 w% of nitrogen) or in the form of calcium ammonium nitrate, i.e. CAN (AN + calcium carbonate/dolomite), granulated with dolomite or calcite, the product containing 25 to 28 w% of nitrogen. Fertiliser blends containing nitrophosphates, for instance, are also prepared from ammonium nitrate. The urea contained in the fertilisers is in the form of prills, granules or crystals.

Ammonium nitrate is explosive when heated or exposed to contact with reducing agents, and for this reason it should be handled with special care and caution. Substances not compatible with ammonium nitrate comprise explosives, corrosive substances, such as acids and bases, chlorates, hypochlorites and chlorides, permanganates, sulphur and several finely divided metal powders, such as zinc, cadmium, copper, magnesium and lead. Among other incompatible substances include organic substances, such as oils, fats and waxes, hay and straw, paper and finely divided wood material. A mixture containing at least 4 w% of potassium chloride in addition to ammonium nitrate is also known to be susceptible to spontaneous thermal degradation.

The fact that ammonium nitrate is incompatible with many substances sets limits to the control of the nutrient ratios in fertilisers containing ammonium nitrate.

To reduce or eliminate the risk of explosion, ammonium nitrate is diluted by admixing it with an inert incombustible substance, such as sand, calcium carbonate, ammonium phosphate and/or gypsum, thus achieving a non-flammable and unexplosive mixture containing typically 70 to 80 w% of ammonium nitrate.

WO 97/14665, for instance, discloses an unexplosive fertiliser containing ammonium nitrate, which comprises at least 6 w% of totally or partly hydrated gypsum, and in which the proportion of gypsum, water and any other fertiliser components in the fertiliser is so high that the nitrogen nutrient concentration of the fertiliser is less than 28 w%. The fertiliser of this specification has been prepared by granulating a mixture obtained by adding gypsum (CaSO4* 1/2H2O and/or CaSO4) to an aqueous suspension of ammonium nitrate and by coating the finished granules with a finely divided gypsum powder. However, due to the water amount required for successful granulation and to the hygroscopicity of the gypsum powder used for coating, the finished granules of the invention tend to moisten and agglomerate, as well as break into powder during storage.

The use of calcium sulphate as a granulating agent in nitrogen (N) fertiliser granules has been described also in patent specification GB 991 575. In this specification, granulation is performed by adding to an aqueous solution of the nitrogen source at least partly dehydrated calcium sulphate, which is used for absorbing chemically the free water as crystal water in order to facilitate drying of formed granules. In addition, the granules can be coated with said calcium sulphate. E.g. an aqueous solution of ammonium nitrate, urea or a non-polymerised urea-formaldehyde mixture have been used as the nitrogen source. In said granulation process a viscous phosphate slime, which is a clay slurry obtained from phosphatic ore, can further be used as a binder and the phosphorus source. The slurry can also be added as a coating after granulation.

GB 815829 discloses coated fertiliser granules. The fertiliser granules are precoated with an inorganic material and subsequently coated with a substantially water insoluble polymeric material or a material capable of polymerising to give a substantially water-insoluble polymer.

US3708276 discloses granular fertilizers having controlled nutrient release and comprising a core and an enveloping layer. Said layer is prepared from water-insoluble synthetic resin having particles foreign to said resin embedded in it. GB785645 discloses granular fertilizer materials containing phosphorous. The fertilizer material is sprayed with a solution containing a urea-formaldehyde condensation product thereby reducing the liability of caking.

US4015970 discloses granules containing a core of fertilizer and a polymeric coating. The coating also comprises inorganic materials some of which are water soluble and some are water insoluble.

GB 570267 discloses coating granules of ammonium nitrate with plaster of Paris to produce a free flowing product.

EP 013 108 further uses calcium sulphate hemihydrate and a surfactant as a granulating agent in order to enhance crystal agglomeration of water-soluble potassium and ammonium salts that are difficult to granulate.Both ammonium nitrate and urea prills have poor strength, 6 to 10 N (the force required to break the granule, which can be measured e.g. with devices known in the pharmaceutical industry for the determination of the tensile strength of tablets), and hence they are breakable both during storage, transport and distribution, which makes them dusting and awkward to handle. Furthermore, ammonium nitrate dust as such is a health risk.

It is typical for ammonium nitrate that irreversible changes of the volume of the solid matter may take place, the changes being caused by alterations in the crystal form occurring at temperature variations. Especially repeated temperature rises and drops above the transformation temperature accentuate the problem, resulting in swelling of the ammonium nitrate product. Swelling causes breakage and decay of the fertiliser granules, rupture of bags and exposure of the compound to outdoor air moisture. To prevent expansion, a stabilising agent is usually added to the ammonium nitrate; WO 01/49608, for instance, describes a method of preparing an ammonium nitrate product with thermal and mechanical stability.

The small size (1 mm to 2.5 mm) of both ammonium nitrate prills and granules and also urea prills compared with other usual fertiliser granule sizes results in a product with a tendency to particle-size separation when admixed in a dry state with normally sized (2 mm to 4 mm) fertiliser granules. Such a fertiliser blend, in turn, yields an irregular fertilising result.

The safety, storage and application properties of ammonium nitrate prills and granules, and also the storage and application properties of urea prills, especially their mechanical strength and moisture resistance, have been tried to improve by coating the prills. Coating has also aimed at an increased particle size in order to achieve better miscibility with other fertilisers.

The incompatibility problem also sets limits to the range of substances suitable for coating ammonium nitrate prills or granules. Organic substances, such as waxes, which are conventionally used for fertiliser coating, or sulphur, which is commonly used, are not applicable to the coating of ammonium nitrate prills because of the risk of explosion. As a rule, organic substances must not be present in significant amounts in ammonium nitrate; depending on the regulation, the maximum permissible concentration of carbon of organic origin is 0.2 to 0.4%.

Ammonium nitrate prills have been coated, "powdered" with gypsum, kaolin or talcum, for instance. However, there has still been the problem of poor moisture endurance.

Since both ammonium nitrate and urea prills are products used in huge volumes, their overall coating cost has a significant economic impact if the prills require coating with potassium sulphate or any other expensive substance.

For the reasons above, the preparation of fertilisers, especially those containing urea, and particularly ammonium nitrate, still involves a great number of unresolved problems or limits relating to safety, strength, nutrient content control and economy; for example the sole commercially available fertiliser containing ammonium nitrate and sulphur (AN + ammonium sulphate) has caused accidents because of its explosiveness.

### Brief description of the invention

It has now been surprisingly found that, when coating fertiliser granules, which contain nitrogen, phosphorus and/or potassium as a nutrient, by adhering with an adhesive a coating agent that contains an inorganic compound which absorbs water as crystal water to the surface of the granules, then the obtained the combination of adhesive and coating agent results in a coating which improves the properties of the granules, such as their mechanical strength, and/or decreases their hygroscopicity. As for the special features of the coated granules of the invention, reference is made to the claims.

The invention further provides a method for preparing coated fertilizer granules. Special features of said method are given in claim 10. The coating agent is typically in a particulate form, e.g. a powder. The method allows easier and simpler preparation of fertiliser granules, especially of granules containing nutrients that are difficult to handle.

"An inorganic compound, which absorbs water as crystal water" or "an inorganic compound that absorbs free water as crystal water" means an inorganic compound, which is at least partly in dehydrated form, e.g. in a form of an anhydrite or a hemihydrate, and said at least partly dehydrated form of the compound is capable of binding, i.e. absorbing chemically, the free water in the form of crystal water. The binding of water as crystal water is a well-known phenomen in the chemical field.

The term "granules" is used in the description to illustrate granules generally known in connection with fertilisers (e.g. 2 to 4 mm) and prills (e.g. 1 to 2.5 mm), or other corresponding fertiliser particles. In the examples, however, the specific names "prill" or "granules" have been used.

The expression "fertiliser granules containing nitrogen, phosphorus and/or potassium as nutrient" means that the fertiliser contains nitrogen (N), phosphorus (P) and/or potassium (K) in an amount that is sufficient for nutrient purposes. The term "nutrient" is well known in the field of fertilisers and can be e.g. defined and/or regulated by authorities. Preferably, N-, P- and/or K-containing compounds form the major part of the fertiliser, provide the source of the nutrient in question. (Known as N, P, K, NP, NK, KP and/or NPK fertiliser granules).

### Detailed description of the invention

The present invention thus relates to a method for coating fertiliser granules containing nitrogen, phosphorus and/or potassium as a nutrient, which markedly improves the product characteristics of the fertiliser, especially both of ammonium nitrate and of urea particles; in particular, hygroscopicity decreases and particle strength increases. Also coated granular fertiliser product is provided.

Further, due to the specific combination of the adhesive and the coating agent of the invention, part of the compounds, e.g. sulphur compound, to be included into the nitrogen, phosphor and/or potassium fertiliser particles can suitably be added e.g. in nutritive amount into the coating only, or into the coating and the core of the particles.

Typically, the adhesive is present only in the coating layer of the granules.

The coating of the invention is particularly useful for the coating of ammonium nitrate and urea granules, whereby the method enables also the preparation of highly water-soluble fertilisers having varied nutrient content and yet being rich in nitrogen.

The inorganic compound which absorbs chemically water as crystal water is preferably calcium sulphate hemihydrate and/or (reactive) calcium sulphate anhydrite. Calcium sulphate hemihydrate is a particularly useful compound.

The coating may comprise one or more adhesive layers and one or more coating agent layers. The coating may comprise completely or partly separate adhesive and coating agent layers, or, furthermore, it may comprise a mixture of adhesive and coating agent, preferably a homogenous blend. There may also be one or more of such mixture layers.

The one or more coating layers may further contain other substances in addition to an adhesive and/or coating agent, e.g. further compounds known as coating agents. Thus, in addition to an inorganic compound which absorbs the free water as crystal water, e.g. calcium sulphate hemihydrate and/or a reactive calcium sulphate anhydrite, the coating agent may contain one or more of the following: dolomite, magnesium sulphate, calcium carbonate, potassium sulphate and/or sodium sulphate. In some applications, a mixture of the calcium sulphate salt of the invention, lime and/or dolomite is used.

Other usual nutrient salts and trace elements can also be added to the coating agent. In addition, biostimulants and/or pesticides, which mean herein insecticides, fungicides and herbicides, can be included into the coating agent.

The adhesive is preferably an organic polymer based adhesive, e.g. urea formaldehyde, polyvinyl acetate or latex based adhesive, or a mixture of such adhesives. The adhesive preferably contains a compound that is curable by polymerisation, and more preferably, the adhesive contains a compound that is curable by polymerisation so that water is formed in said polymerisation reaction as a result of the condensation reaction.

An embodiment provides as an adhesive a compound that is capable of forming (condensing) water when polymerised and cured.

The proportion of adhesive is suitably 0.2 to 15 w%, preferably 1 to 10 w% of the weight of coated granules.

The adhesive is preferably urea formaldehyde. The molar ratio of urea to formaldehyde may be 0.7 - 2.

In one embodiment, the adhesive contains urea formaldehyde, and the amount of the adhesive is 0.2 to 15, preferably 1 to 10, w% of the weight of the coated particles and the molar ratio of urea to formaldehyde is preferably 0.7 - 2.

Thus the invention provides as a particularly preferred embodiment coated granules usable as a fertiliser, which contain ammonium nitrate and/or urea and in which the actual coating agent has been adhered to the surface of the ammonium nitrate or urea core with the aid of an adhesive, such as urea formaldehyde (UF). The coating agent contains suitably calcium sulphate hemihydrate and/or reactive calcium sulphate anhydrite, preferably calcium sulphate hemihydrate.

The invention relates further to a coating method, wherein a coating agent is adhered to the surface of a granule using an adhesive, such as urea formaldehyde containing adhesive, either by performing coating by means of a mixture containing the adhesive and the coating agent, or by first treating the granules with the adhesive and then with the coating agent, resulting in a more distinctly layered coating structure. The coating treatments can be repeated either completely or only partly.

The method can also be used to increase the size of granules, e.g. of prills.

Preferably, an aqueous solution of the adhesive is used for coating. The amount of an inorganic compound, which absorbs water as crystal water and contained in the coating agent, can be chosen so that said compound binds (absorbs) the water present in the adhesive solution and/or the water that is condensed as the result of the polymerisation of the adhesive. Preferably, a polymeric adhesive that releases (condenses) water when cured, i.e. polymerised, is used as the adhesive and the amount of said inorganic compound is selected so that it binds, as crystal water, all or part of the water formed in the polymerisation reaction of the adhesive. Thus, advantageously, the amount of water to be added to the coating step, e.g. the water proportion in the aqueous solution of adhesive, can be decreased, whereby the drying step of the coated granules following the coating step can be avoided or markedly facilitated.

The coating preferably contains a compound that releases water when cured as the adhesive and calcium sulphate hemihydrate and/or reactive calcium sulphate anhydrite, whereby said calcium sulphate hemihydrate and/or reactive anhydrite act in the coating agent as "a catalyst", which binds the condensed water as crystal water during the polymerisation of the adhesive and the curing of the coating. The coating method of the invention enables a marked decrease in the amount of water to be added to the granulator compared to conventionally used amounts.

When e.g. calcium sulphate hemihydrate and/or reactive calcium sulphate anhydrite is used, the proportion of sulphur (S) contained in the coating may vary e.g. in the range between 0.1 to 15 w%, suitably 2 to 10 w% of the weight of the coated granules.

The amount of the overall coating, i.e. adhesive + coating agent, in the coating of the invention may vary between 0.5 to 50 w%, suitably 10 to 40 w% of the weight of the coated granules.

The invention is very suitable for coating granules that contain e.g. nutrients that are difficult to handle, such as ammonium nitrate and/or urea. Naturally, the coating of the invention can be used for coating granular fertilisers, which contain other nitrogen sources than ammonium nitrate and/or urea, or which contain other nutrients, such as P- or K-nutrients. In the granules of the invention, it is thus possible to include, into the coating layer and/or into the core, several nutrients, e.g. sulphur and additionally N-, P- and/or K- nutrients, e.g. NP or NPK. Moreover, the coated granular fertiliser of the invention can be used as such (granules have the same composition) or it can be mixed in a known manner to form a granular fertiliser blend with one or more other granular fertiliser(s), which optionally has(have) been coated with the coating of the invention. Thus a granular fertiliser blend described here contains granules of two or more different fertilisers (e.g. NPK-, NK- or NP-blend), and at least part of the granules of the blend are coated granules according to the present invention. Preferably the granules of at least one fertiliser of the blend, e.g. granules containing ammonium nitrate or urea, are coated according to the invention. The coating of a fertiliser blend, wherein the granules of two or more different fertilisers are coated according to the invention, can be effected before forming the blend, i.e. by coating the granules of the different fertilisers separately, or after forming the blend, i.e. all or part of the fertilisers to be blended are mixed together and the granules of obtained mixture are coated according to the method of the invention.

The coating method of the invention also allows for preparation of coated NPK-, NK- and NP- fertiliser granules, in which the principal nitrogen source, e.g. more than 50 w% of the total nitrogen in the fertiliser, is formed of ammonium nitrate or urea.

Ammonium nitrate granules may be stabilised before coating using for instance the method described in WO 01/49608.

In accordance with the invention, the coating of fertiliser granules, e.g. ammonium nitrate and urea granules, can be performed in a conventional granulator, e.g. a disc, drum or plunger granulator, or in a fluidised bed, or in a mixer, e.g. a Doyle blender, a concrete mixer or a Fertimix apparatus.

The material to be coated is introduced into the granulator. At the initial coating stage, the temperature of the particles to be coated may be appr. 20 °C. Coating is performed by adding the adhesive as a solution, e.g. by spraying, and the coating agent in solid form, e.g. by scattering, into the granulator, either simultaneously, whereby the particles to be coated are preferably first treated with an adhesive, or successively. The adhesive is sprayed into the granulator as an aqueous solution, preferably as a 47 to 75 w% aqueous solution. The coating process can be repeated at least once and/or the final treatment of the particles may be effected using the adhesive alone.

The method of the invention is safe and economical, since it can be simply implemented without any recycling, which is usually required when calcium sulphate is used as a granulating agent in connection with granulation.

The following examples illustrating preferred embodiments are intended to illuminate the invention, without nevertheless in any way restricting the scope of protection of the invention.

### Examples

The raw materials used are known and commercially available. UF-adhesive was a commercial UREX 3620-product (available from Dynea, Finland). The aqueous solution of UF adhesive contained 50 w% of UF adhesive. D 50 mm is the average diameter. An µ bag stands for a small 100 g bag, where the granules were maintained in a compressed state for 1 day under a pressure of 1 bar/cm², and after this the agglomeration level was studied: 0 = no agglomeration, 1 = very little agglomeration, 2 = some agglomeration.

The strength was measured with an apparatus known in the pharmaceutical field for measuring the tensile strength of tablets.

### Example 1: Coating of ammonium nitrate

Ammonium nitrate prills were coated (tests 1 to 4, disc granulator, diameter 30 cm) and ammonium nitrate granules (test 5; disc granulator, diameter 1 m) with the method of the invention. Material to be coated was introduced into the granulator, in an amount of 2.5 kg (tests 1 to 4) and 30 kg (test 5) depending on the test. The raw material ratios in the various tests are shown in table 1.

In a first step, about 10 g of an aqueous solution of an adhesive containing urea formaldehyde with a UF concentration of about 50 w% was injected into the granulator, onto the surface of the prills. In a second step, the coating agent containing preblended solid raw materials was scattered while the UF solution (90 g) was sprayed onto the surface of the prills for about 15 minutes. Finally 20 g of water was injected into the granulator. The temperature of the particles to be coated was about 20 °C.

**Table 1**

| Raw materials (kg/t) | | | | | | |
|---|---|---|---|---|---|---|
| Test | | 1 | 2 | 3 | 4 | 5 |
| AN | prills test 1-4 | | | | | |
| | Granules test 5 | 690 | 790 | 690 | 690 | 690 |
| CaSO₄*0.5 H₂O | | 200 | 140 | 140 | 140 | 140 |
| Dolomite | | - | - | - | 40 | 140 |
| MgSO₄ | | 80 | 50 | 40 | 50 | - |
| CaCO₃ | | - | - | 100 | - | - |
| K₂SO₄ | | - | - | - | 50 | - |
| UF adhesive | | 30 | 20 | 30 | 30 | 30 |

**Table 2**

| Chemical analysis of coated prills and granules | | | | | | |
|---|---|---|---|---|---|---|
| Test | | 1 | 2 | 3 | 4 | 5 |
| Water (KF) | % | 2.8 | 2.9 | 3.3 | 2.8 | 1.2 |
| N Total | % | 26.9 | 28.2 | 24.9 | 26.2 | 23.7 |
| NO₃-N | % | 12.9 | 13.9 | 12.1 | 12.6 | 11.3 |
| NH₄-N | % | 12.8 | 14.0 | 12.0 | 12.6 | 11.7 |
| K₂O | % | - | - | - | 1.5 | - |
| pH | | 6.2 | 6.2 | 6.7 | 6.8 | 6.8 |
| Ca | % | 4.8 | 3.8 | 6.1 | 4.9 | 7.0 |
| Mg | % | 0.5 | 0.73 | 1.9 | 0.78 | - |
| S | % | 5.3 | 3.9 | 3.9 | 4.4 | 3.9 |

| XRD (semi quantitative X-ray diffraction analysis) | | | | | | |
|---|---|---|---|---|---|---|
| QXRD(quantitative X-ray diffraction analysis) | | | | | | |
| w% | | | | | | |
| CaSO₄*0.5H₂O | | X | X | X | X | 10 |
| MgSO₄ | | x | x | x | x | |
| AN(IV) | | X | X | X | X | 66 |
| (NH₄)₂Mg(SO₄)₂*6H₂O | | x | x | x | x | |
| Dolomite | | | | X | x | 13 |
| CaCO₃ | | | | | x | |
| N3 | | | | | X | |
| -%KNO₃21 | | | | | | |
| -%AN 79 | | | | | | |

| | | | | | | |
|---|---|---|---|---|---|---|
| (x=observable; X=considerable amount) | | | | | | |

**Table 3**

| Product characteristics of coated prills and granules | | | | | | |
|---|---|---|---|---|---|---|
| Test | 1 | 2 | 3 | 4 | 5 | AN prills 1.4 mm |
| Screen analysis % | | | | | | |
| +4 mm | | | | | 63 | |
| -4+3.35 mm | | | | | 21 | |
| -3.35+2 | | | | | 16 | |
| +2.5 mm | 2 | 5 | 4 | 3 | | 0 |
| -2.5 + 2 mm | 16 | 15 | 22 | 21 | | 4 |
| -2 + 1.4 mm | 72 | 75 | 71 | 70 | | 89 |
| -1.4 + 1 mm | 3 | 2 | 1 | 2 | | 7 |
| -1 + 0.5 mm | 1 | 2 | 2 | 4 | | - |
| -0.5 mm | 5- | - | - | - | | |
| D 50 mm | 1.7 | 1.8 | 1.8 | 1.8 | 4.2 | 1.7 |
| UI | 26 | 60 | 60 | 52 | 63 | 52 |
| Agglomeration level in µ bags | 0 | 2 | 1 | 1 | 0 | 2 |
| H₂O(furnace)" ¹⁾ | 2.6 | 2.6 | 2.5 | 2.6 | 1.6 | 0.1 |
| H₂O(furnace)" ²⁾ | 3.4 | 3.2 | 3.0 | 3.1 | 2.4 | 0.6 |
| Strength N | 15 | 14 | 18 | 16 | 73 | 12 |
| Abrasion % | 66 | 37 | 35 | 20 | 6.9 | 55 |
| Roundness % | 76 | 39 | 34 | 56 | 85 | 80 |
| Dust | 2 | 1 | 1 | 2 | 0 | 1 |

The tests show that the coated fertiliser prills of the invention containing ammonium nitrate as the principal nitrogen source had good product characteristics, such as strength and particle size, compared with those of commercial AN prills. Agglomeration was also reduced.

### Example 2: Coating of urea prills

2.5 kg of urea prills were coated with an aqueous solution of the UF adhesive of example 1 following the method of the invention and using a disc granulator (diameter of 30 cm).

Table 4 shows the raw material ratios in the coated urea prills

About 10% of the adhesive was sprayed into the granulator onto the surface of the prills. After this, about half of the solid coating agent was added simultaneously with the UF adhesive. Granulation was carried on for 5 minutes without additions, and after this the remainder of the adhesive and coating agent was introduced in the granulator simultaneously, followed by 5 minutes of further granulation.

**Table 4**

| Raw materials (kg/t) | | | | |
|---|---|---|---|---|
| Test | A | B | C | D |
| Urea prills | 690 | 690 | 790 | 690 |
| CaSO₄*0.5 H₂O | 140 | 200 | 100 | 140 |
| Dolomite | - | - | - | 140 |
| CaCO₃ | 100 | 50 | 50 | - |
| MgSO₄ | 40 | 30 | 40 | - |
| UF adhesive | 30 | 30 | 20 | 30 |

**Table 5 shows the results of the chemical analysis of coated urea prills**

| | | | | |
|---|---|---|---|---|
| Water % | 2.2 | 3.0 | 1.9 | 1.2 |
| N Total % | 33.5 | 33.8 | 37.3 | 32.6 |
| Urea N % | 33.5 | 33.5 | 37.3 | 32.5 |
| pH | 7.4 | 7.4 | 7.6 | 7.0 |
| Ca | 6.2 | 7.0 | 4.0 | 7.6 |
| Mg | 1.8 | 0.83 | 1.4 | 3.4 |
| S | 3.7 | 4.9 | 3.1 | |

| XRD (semi quantitative) | | | ** | |
|---|---|---|---|---|
| Dolomite | X | X | x | 12 |
| Urea | X | X | X | 74 |
| CaSO₄*0.5H₂O | X | X | X | 11 |
| MgSO₄ | - | - | x | - |

| | | | | |
|---|---|---|---|---|
| **QXRD | | | | |

**Table 6 shows the product characteristics of coated urea prills**

| Test | A | B | C | C | Urea prills +1.4 mm (comparison) |
|---|---|---|---|---|---|
| Screen analysis % : | | | | | |
| +3.35 mm | 0 | - | 5 | 1 | - |
| +2.8 mm | - | 3 | - | - | 1 |
| -3.35+2.8 mm | 6 | - | 7 | 4 | - |
| -2.8+2.5 mm | 13 | 14 | 15 | 63 | 4 |
| -2.5+2 mm | 53 | 53 | 50 | - | 41 |
| -2+1.4 mm | 25 | 23 | 21 | 32 | 49 |
| -1.4 + 0.5 mm | 2 | 2 | 1 | 0 | 5 |
| -0.5 mm | 1 | 0 | 0 | - | - |
| D 50 mm | 2.2 | 2.2 | 2.3 | 2.2 | 2.0 |
| UI | 53 | 54 | 50 | 42 | 57 |
| Agglomeration level in µ bags | 1 | 1 | 2 | 0 | 0 |
| H₂O(furnace) ¹⁾ | 2.1 | 2.4 | 2.1 | 2.0 | 0.5 |
| H₂O(furnace) ²⁾ | 2.8 | 3.4 | 2.8 | - | 0.6 |
| Strength N | 23 | 18 | 22 | 18 | 13 |
| Abrasion % | 0.8 | 11 | 0.8 | 0.7 | 7 |
| Roundness % | 83 | 87 | 58 | 77 | 89 |
| Dust | 2 | 2 | 1 | 1 | 1 |

| | | | | | |
|---|---|---|---|---|---|
| 1) At the outset of the test; 2) samples maintained for 2 h in a furnace at 80% relative humidity (RH). | | | | | |

The strength of coated prills also improved and their size could be appreciably increased.

### Example 3: Coating of ammonium nitrate (AN)

Ammonium nitrate prills (average diameter 2 - 2.5 mm) were coated in a Doyle blending apparatus in batches (3 - 4.5 t) according to the formula of table 4.

In the first step, AN was introduced in the blending apparatus. In the second step, a mixture of water and UF adhesive was injected into the blending apparatus so as to moisten the prill surface. This was followed by simultaneous and/or alternating addition of hemihydrate and water +UF adhesive mixture into the blending apparatus. The mixture of water and adhesive was used in a proportion of about 3 to 5% of the batch quantity depending on the formula.

When all the raw materials had been added, there were no significant amounts of dust.

**Table 7**

| Raw materials (kg/t) | | |
|---|---|---|
| Test | I | II |
| AN prills | 780 | 680 |
| CaSO₄*0.5H₂O | 200 | 300 |
| UF adhesive | 12 | 12 |
| Analyses | | |

| Test | I | II |
|---|---|---|
| NH₄-N% | 13.3 | 11.8 |
| NO₃-N% | 13.6 | 12.1 |
| C Total (Leco) % | 0.33 | 0.34 |
| N Total (Leco) % | 26.7 | 23.8 |
| pH | 5.7 | 5.5 |
| S% | 4.0 | 5.5 |
| Granule strength N | 17 | 15 |
| Dust mg/kg | <100 | 200 |
| Roundness % | 94 | 91 |

### Example 4: coating of ammonium nitrate

Ammonium nitrate prills and granules (average diameter about 1.5 mm and about 3.9 mm, respectively) were coated in a concrete mixer in 20 kg batches with the formulas of table 8.

First the AN prills/granules were moistened with a mixture of water and UF adhesive, after which a hemihydrate and the mixture of water and UF adhesive were simultaneously introduced into a rotating concrete mixer onto the prills.

### Example 8

| Raw materials (kg/t) | | |
|---|---|---|
| Test | a | B |
| AN prills(D50 1.5mm) | 780 | - |
| AN granules (D50 3.9mm) | - | 780 |
| Hemihydrate | 200 | 200 |
| UF adhesive | 12 | 12 |
| Water | 30 | 28 |

**Table 9**

| Physical properties of coated prills /granules | | |
|---|---|---|
| Test | A | B |
| D50 mm | 1.6 | 3.9 |
| UI% | 53 | 62 |
| Agglomeration in µ bags Level | 1 | 0 |
| Granule strength N | 9 | 73 |
| Dust mg/kg | 600 | 100 |
| Roundness % | 71 | 81 |

### Example 5: Coating of NP prills

Prills 26-14-0 were coated in a concrete mixer in a 15 kg batch. The formulas are shown in table 10.

**Table 10**

| Raw materials (kg/t) | | |
|---|---|---|
| Formula | 1 | 2 |
| 26-14-0 | 780 | 780 |
| Reactive anhydrate CaSO₄ | 200 | - |
| Hemihydrate | - | 200 |
| UF adhesive | 12 | 12 |

First the prills were moistened with a mixture of water and UF adhesive, after which a hemihydrate and the mixture of water and UF adhesive were simultaneously introduced into a rotating concrete mixer onto the prills.

**Table 11**

| Physical properties of coated prills | | |
|---|---|---|
| Formula | 1 | 2 |
| Average granule size D50 mm | 3.8 | 3.8 |
| Agglomeration in µ bags | 1 | 0 |
| Granule strength N | 31 | 88 |
| Dust mg/kg | 1200 | 800 |
| Roundness % | 84 | 74 |

### Example 6: Coating of blends

Blends 27-4-5 and 22-2-14 were coated in a concrete mixer in 15 kg batches. The blends were mixed from ammonium nitrate prills, MAP granules and compacted KCl. The coating formulas are shown in table 12.

**Table 12**

| Coating formulas of the blends | | |
|---|---|---|
| Raw material (kg/t)/Formula | 1 | 2 |
| 27-4-5 | 780 | |
| 22-2-14 | - | 780 |
| Hemihydrate | 200 | |
| Anhydrate | - | 200 |
| UF adhesive | 12 | 12 |

First the blends were moistened with a mixture of water and UF adhesive, after which a hemihydrate and the mixture of water and UF adhesive were simultaneously introduced into a rotating concrete mixer onto the blends.

**Table 13**

| Physical properties of coated blends | | |
|---|---|---|
| Formula | 1 | 2 |
| Basic blend | 27-4-5 | 22-2-14 |
| D50 mm | 2.6 | 2.5 |
| Agglomeration in µ bags | 0 | 2 |
| Granule strength N | 26 | 18 |
| Dust* mg/kg | 500 | 2500 |
| Roundness % | 65 | 41 |

| | | |
|---|---|---|
| * Compacted KCl increases the dust in the blends | | |

## Claims

1. Coated fertiliser granules comprising a core which contains nitrogen, phosphorus and/or potassium as a nutrient, ***characterised in that***
the coating comprises an adhesive and a coating agent, and
**in that** the coating agent in solid form contains an inorganic compound which absorbs water as crystal water.

2. Coated fertiliser granules as defined in claim 1, ***characterised in that*** the adhesive is urea formaldehyde.

3. Coated fertiliser granules as defined in claim 1 or 2, ***characterised in that*** said inorganic compound is calcium sulphate hemihydrate and/or reactive calcium sulphate anhydrite.

4. Coated fertiliser granules as defined in claim 3, ***characterised in that*** the coating agent contains calcium sulphate hemihydrate.

5. Coated fertiliser granules as defined in any of the preceding claims, ***characterised in that*** the granules comprise a core of ammonium nitrate or urea, an adhesive and a coating agent, wherein the coating agent comprises calcium sulphate hemihydrate.

6. Coated fertiliser granules as defined in any of the preceding claims, ***characterised in that*** the amount of the adhesive is between 0.2 to 15 wt% of the weight of the coated granules.

7. Coated fertiliser granules as defined in any of the preceding claims, ***characterised in that*** the amount of the adhesive and coating agent is between 0.5 to 50 wt% of the coated granules.

8. Coated fertiliser granules as defined in any of the preceding claims, ***characterised in that*** the granules contain ammonium nitrate or urea as the principal nitrogen source and additionally phosphorous and/or potassium.

9. Coated fertiliser granules as defined in any of the preceding claims, ***characterised in that***
the coating comprises at least one adhesive layer and at least one coating agent layer; or
the coating comprises at least one layer containing a mixture of an adhesive and a coating agent.

10. A method for preparing coated fertiliser granules as defined in any of claims 1 to 9, ***characterised by*** applying
an adhesive solution and
a coating agent containing an inorganic compound that absorbs water as crystal water to the surface of the granules to be coated.

11. A method as defined in claim 10, ***characterised by*** spraying an adhesive and scattering a powdery coating agent that contains calcium sulphate hemihydrate and/or calcium sulphate anhydrite onto the granules.

12. A method as defined in claim 10 or 11, ***characterised by*** preparing coated fertiliser granules containing ammonium nitrate or urea as the principal nitrogen source.

13. A method as defined in any one of claims 10 to 12, ***characterised in that*** the spraying of adhesive and the scattering of coating agent can be performed simultaneously or step-wise, with the adhesive being sprayed first and the coating agent subsequently.

14. A method as defined in any one of claims 10 to 13, ***characterised in that*** the granules are treated with an adhesive before the coating agent is scattered.

15. A method as defined in any one of claims 10 to 14, ***characterised in that*** an aqueous solution of adhesive is sprayed onto the granules.

## Patentansprüche

1. Beschichtete Düngemittelgranulate umfassend einen Kern, der Stickstoff, Phosphor und/oder Kalium als einen Nährstoff enthält, ***dadurch gekennzeichnet, dass***
die Beschichtung einen Klebstoff und ein Beschichtungsmittel umfasst, und
das Beschichtungsmittel in fester Form eine anorganische Verbindung enthält, die Wasser als Kristallwasser absorbiert.

2. Beschichtete Düngemittelgranulate, wie in Anspruch 1 definiert, ***dadurch gekennzeichnet, dass*** der Klebstoff ein Harnstoffformaldehyd ist.

3. Beschichtete Düngemittelgranulate, wie in Anspruch 1 oder 2 definiert, ***dadurch gekennzeichnet, dass*** die anorganische Verbindung Calciumsulfat-Hemihydrat und/oder reaktives Calciumsulfat-Anhydrit ist.

4. Beschichtete Düngemittelgranulate, wie in Anspruch 3 definiert, ***dadurch gekennzeichnet, dass*** das Beschichtungsmittel Calciumsulfat-Hemihydrat enthält.

5. Beschichtete Düngemittelgranulate, wie in einem der vorhergehenden Ansprüche definiert, ***dadurch gekennzeichnet, dass*** die Granulate einen Kern aus Ammoniumnitrat oder Harnstoff, einen Klebstoff und ein Beschichtungsmittel umfassen, wobei das Beschichtungsmittel Calciumsulfat-Hemihydrat umfasst.

6. Beschichtete Düngemittelgranulate, wie in einem der vorhergehenden Ansprüche definiert, ***dadurch gekennzeichnet, dass*** die Menge des Klebstoffs zwischen 0,2 bis 15 Gew.-% der beschichteten Granulate liegt.

7. Beschichtete Düngemittelgranulate, wie in einem der vorhergehenden Ansprüche definiert, ***dadurch gekennzeichnet, dass*** die Menge des Klebstoffs und des Beschichtungsmittels zwischen 0,5 bis 50 Gew.-% des beschichteten Granulats liegt.

8. Beschichtete Düngemittelgranulate, wie in einem der vorhergehenden Ansprüche definiert, ***dadurch gekennzeichnet, dass*** die Granulate Ammoniumnitrat oder Harnstoff als die hauptsächliche Stickstoffquelle und zusätzlich Phosphor und/oder Kalium enthalten.

9. Beschichtete Düngemittelgranulate, wie in einem der vorhergehenden Ansprüche definiert, ***dadurch gekennzeichnet, dass***
die Beschichtung wenigstens eine Klebstoffschicht und wenigstens eine Schicht aus Beschichtungsmittel umfasst; oder
die Beschichtung wenigstens eine Schicht enthaltend eine Mischung aus einem Klebstoff und einem Beschichtungsmittel umfasst.

10. Ein Verfahren zur Herstellung beschichteter Düngemittelgranulate, wie in Ansprüchen 1 bis 9 definiert, ***dadurch gekennzeichnet, dass***
eine Lösung eines Klebstoffs und
ein Beschichtungsmittel, das eine anorganische Verbindung enthält, die Wasser als Kristallwasser absorbiert, auf der Oberfläche der zu beschichtenden Granulate aufgebracht werden.

11. Ein Verfahren, wie in Anspruch 10 definiert, ***dadurch gekennzeichnet, dass*** ein Klebstoff versprüht wird und ein pulverförmiges Beschichtungsmittel, das Calciumsulfat-Hemihydrat und/oder Calciumsulfat-Anhydrit enthält, auf die Granulate verstreut wird.

12. Ein Verfahren, wie in Anspruch 10 oder 11 definiert, ***dadurch gekennzeichnet, dass*** beschichtete Düngemittelgranulate, die Ammoniumnitrat oder Harnstoff als die hauptsächliche Stickstoffquelle enthalten, hergestellt werden.

13. Ein Verfahren, wie in einem der Ansprüche 10 bis 12 definiert, ***dadurch gekennzeichnet, dass*** ein Klebstoff versprüht wird, und das Verstreuen des Beschichtungsmittels gleichzeitig oder schrittweise durchgeführt werden kann, wobei der Klebstoff zuerst versprüht werden kann und das Beschichtungsmittel anschließend verstreut wird.

14. Ein Verfahren, wie in einem der Ansprüche 10 bis 13 definiert, ***dadurch gekennzeichnet, dass*** die Granulate mit einem Klebstoff behandelt werden, bevor das Beschichtungsmittel verstreut wird.

15. Ein Verfahren, wie in einem der Ansprüche 10 bis 14 definiert, ***dadurch gekennzeichnet, dass*** eine wässrige Lösung des Klebstoffs auf die Granulate versprüht wird.

## Revendications

1. Granulés d'engrais enrobés comprenant un noyau qui contient de l'azote, du phosphore et / ou du potassium comme nutriment, ***caractérisés en ce que***
l'enrobage comprend un adhésif et un agent d'enrobage, et
**en ce que** l'agent d'enrobage sous forme solide contient un composé inorganique qui absorbe l'eau sous forme d'eau de cristallisation.

2. Granulés d'engrais enrobés selon la revendication 1, ***caractérisés en ce que*** l'adhésif est l'urée-formaldéhyde.

3. Granulés d'engrais revêtues selon la revendication 1 ou 2, ***caractérisés en ce que*** ledit composé inorganique est un hémihydrate de sulfate de calcium et / ou une anhydrite de sulfate de calcium réactif.

4. Granulés d'engrais enrobés selon la revendication 3, ***caractérisés en ce que*** l'agent d'enrobage contient de l'hémihydrate de sulfate de calcium.

5. Granulés d'engrais enrobés selon l'une quelconque des revendications précédentes, ***caractérisés en ce que*** les granules comprennent un noyau de nitrate d'ammonium ou d'urée, un adhésif et un agent d'enrobage, dans lequel l'agent d'enrobage comprend de l'hémihydrate de sulfate de calcium.

6. Granulés d'engrais enrobés selon l'une quelconque des revendications précédentes, ***caractérisés en ce que*** la quantité d'adhésif est comprise entre 0,2 et 15% en poids du poids des granulés enrobés.

7. Granulés d'engrais enrobés selon l'une quelconque des revendications précédentes, ***caractérisés en ce que*** la quantité d'adhésif et d'agent d'enrobage est comprise entre 0,5 et 50% en poids des granulés enrobés.

8. Granulés d'engrais enrobés selon l'une quelconque des revendications précédentes, ***caractérisés en ce que*** les granules contiennent du nitrate d'ammonium ou de l'urée comme principale source d'azote et en outre du phosphore et / ou du potassium.

9. Granulés d'engrais enrobés selon l'une quelconque des revendications précédentes, ***caractérisés en ce que***
l'enrobage comprend au moins une couche adhésive et au moins une couche d'agent d'enrobage; ou
l'enrobage comprend au moins une couche contenant un mélange d'un adhésif et d'un agent d'enrobage.

10. Un procédé de préparation de granulés d'engrais enrobés selon l'une quelconque des revendications 1 à 9, ***caractérisé par*** l'application
d'une solution adhésive et
d'un agent d'enrobage contenant un composé inorganique qui absorbe l'eau sous forme d'eau de cristallisation à la surface des granulés à enrober.

11. Un procédé selon la revendication 10, ***caractérisé par*** la pulvérisation d'un adhésif et la dispersion d'un agent d'enrobage en poudre qui contient des hémihydrates de sulfate de calcium et / ou de l'anhydrite de sulfate de calcium sur les granulés.

12. Un procédé selon la revendication 10 ou 11, ***caractérisé par*** la préparation de granulés d'engrais enrobés contenant du nitrate d'ammonium ou de l'urée comme principale source d'azote.

13. Un procédé selon l'une quelconque des revendications 10 à 12, ***caractérisé en ce que*** la pulvérisation d'adhésif et la dispersion d'un agent d'enrobage peuvent être effectuées simultanément ou par étapes, l'adhésif étant préalablement pulvérisé et l'agent d'enrobage par la suite.

14. Un procédé selon l'une quelconque des revendications 10 à 13, ***caractérisé en ce que*** les granulés sont traités avec un adhésif avant que l'agent d'enrobage soit dispersé.

15. Un procédé selon l'une quelconque des revendications 10 à 14, ***caractérisé en* ce qu'**une solution aqueuse d'adhésif est pulvérisée sur les granulés.
